# FASCICULE DE BREVET EUROPEEN

(11) **EP 0 519 792 B1**
(45) Date de publication et mention de la délivrance du brevet: **25.01.1995**
(21) Numéro de dépôt: 92401644.7
(22) Date de dépôt: 12.06.1992
(51) Int. Cl.: F16B 7/04, E04B 1/58

(54) **Attache d'assemblage de profilés et structure de profilés obtenue avec cette attache**
Befestigungsvorrichtung zum Zusammenbau von Profilen und damit hergestellte Profilstruktur
Fastener for assembly of profiles and structure of profiles made therewith

(30) Priorité: 17.06.1991 FR 9107389
(43) Date de publication de la demande: 23.12.1992
(73) Titulaire: RAPID S.A., F-75017 Paris (FR)
(72) Inventeur: Leon, Jean-Pierre René, F-78800 Houilles (FR)
(74) Mandataire: Durand, Yves Armand Louis

(56) Documents cités:
- BE-A- 654 752
- GB-A- 472 391
- GB-A- 2 018 935

## Description

La présente invention a essentiellement pour objet une attache pour l'assemblage de profilés.

Elle vise également une structure ou un assemblage de profilés obtenu avec cette attache.

On a déjà proposé des systèmes d'assemblage de profilés dont les faces externes possèdent un profil en creux.

De tels systèmes sont par exemple décrits dans les documents FR-A-2 651 523 et FR-A-2 653 836.

D'une manière générale, les systèmes proposés jusqu'à maintenant pour assembler ces profilés de forme particulière étaient relativement compliqués, coûteux, et plus ou moins difficiles et longs à mettre en oeuvre.

Aussi, la présente invention a notamment pour but de remédier à ces inconvénients en proposant une attache en une seule pièce qui est peu coûteuse et permet la construction rapide et solide d'une structure de profilés ayant la forme spéciale en question.

A cet effet, l'invention a pour objet une attache d'assemblage de profilés dont les faces externes possèdent un profil en creux, caractérisée en ce qu'elle comporte une embase d'un côté de laquelle font saillie au moins deux pattes susceptibles de s'encastrer, par montage en bout sur un profilé ou premier profilé, dans respectivement deux profils en creux formant faces externes de ce profilé, et de l'autre côté de laquelle font saillie au moins deux griffes ou analogues susceptibles de s'encastrer dans l'un des profils en creux formant faces externes d'un deuxième profilé, au moins l'une des deux pattes étant prédéformée pour qu'au serrage de cette patte sur le premier profilé, elle déforme une griffe afin de permettre l'accrochage de l'attache sur le deuxième profilé.

Suivant une autre caractéristique de cette attache, au moins l'une des deux pattes prédéformées est traversée par un élément fileté tel qu'une vis, pouvant être vissée sur le premier profilé.

On comprend donc déjà que la prédéformation de la patte s'annulera sous l'effet du serrage par vissage, ce qui assurera ainsi la fixation des profilés entre eux.

Selon une autre caractéristique de l'attache de cette invention, les griffes précitées constituent un prolongement des pattes en étant réunies à ces dernières par une partie de l'embase.

Les griffes sont constituées par des languettes repliées à partir du bord d'une ouverture ménagée dans l'embase.

Suivant un mode de réalisation préféré, l'embase présente une forme sensiblement carrée dont chaque côté comporte une patte précitée qui est repliée d'un côté de l'embase, l'une de ces pattes étant prédéformée, tandis que deux griffes ou languettes repliées de l'autre côté de l'embase, constituent le prolongement de deux pattes opposées.

On précisera encore ici que chaque patte comporte des bords latéraux repliés coopérant avec les profils en creux formant faces externes du premier profilé.

L'invention concerne encore une structure de profilés obtenue à l'aide d'attaches répondant à l'une ou l'autre des caractéristiques ci-dessus.

Mais les caractéristiques et avantages de l'invention apparaîtront mieux dans la description détaillée qui suit et se réfère aux dessins annexés, donnés uniquement à titre d'exemple, et dans lesquels :
La figure 1 est une vue en élévation et de côté de l'attache, à l'état de repos ;
La figure 2 est une vue en bout de l'attache, suivant la flèche II de la figure 1 ;
La figure 3 illustre en perspective comment s'effectue l'assemblage de deux profilés à l'aide de l'attache selon l'invention.

Suivant un exemple de réalisation, et en se reportant aux dessins, on voit qu'une attche conforme à cette invention comprend essentiellement une embase 1 d'un côté de laquelle font saillie quatre pattes 2, 3, 4 et 5 repliées depuis l'embase, et de l'autre côté de laquelle font saillie deux griffes ou analogues repérées en 6.

Les quatre pattes 2, 3, 4 et 5 peuvent s'encastrer dans respectivement les quatre profils en creux 7 formant faces externes d'un premier profilé 8, tandis que les griffes 6 sont susceptibles de s'encastrer dans l'un 9 des profils en creux 9, 10, 11 et 12 d'un deuxième profilé 13.

L'une 2 des pattes 2, 3, 4 et 5 est, comme on le voit bien sur les figures, prédéformée. Plus précisément, la patte 2 forme avec le plan de l'embase 1 un angle supérieur à 90°, tandis que les autres pattes 3, 4 et 5 forment avec ladite embase ou sont repliées à partir de celle-ci suivant un angle sensiblement égal à 90°.

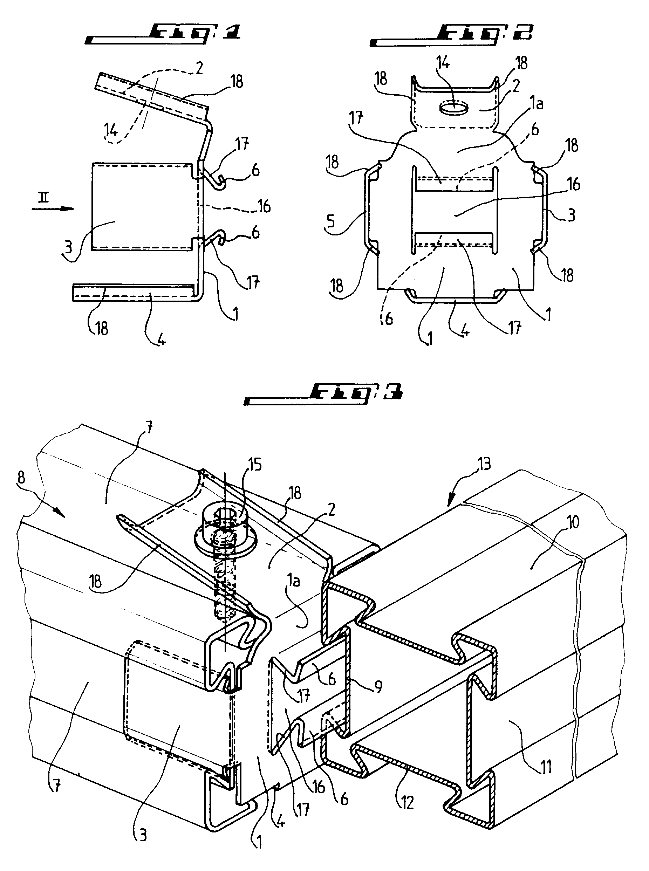

La patte 2 comporte un orifice 14 susceptible d'être traversé par une vis 15 que l'on voit bien sur la figure 3 et qui peut être vissée dans l'un des profils en creux 7 du premier profilé 8, et cela pour les raisons qui seront expliquées plus loin à propos du fonctionnement.

Comme il apparaît clairement sur les figures, l'embase 1 de l'attache comporte une ouverture sensiblement carrée 16 à partir du bord de laquelle sont repliées des languettes 17 constituant les griffes 6. Ces languettes 17 formant griffes 6 constituent en quelque sorte un prolongement des deux pattes opposées 2 et 4 en étant réunies à ces deux pattes par une portion 1a de l'embase 1, comme cela est bien visible sur les figures.

Chaque patte 2, 3, 4, 5 comporte des bords latéraux repliés 18 qui peuvent coopérer avec les profils en creux 7 formant faces externes du premier profilé 8.

Mais, pour une meilleure compréhension de l'invention, on décrira ci-après comment s'effectue l'assemblage des deux profilés 8 et 13 à l'aide de l'attache qui vient d'être décrite.

L'attache, comme on le voit bien sur la figure 3, est montée en bout du profilé 8, de façon que les pattes 3, 4, 5 s'encastrent dans les profils en creux correspondants 7 du profilé 8, tandis que la patte 2, qui est prédéformée, n'est pas encastrée, comme cela apparaît clairement sur la figure 3.

On présente alors l'extrémité du profilé 8 muni de l'attache en regard d'un côté du profilé 13, de manière que les griffes 6 de l'attache pénètrent dans l'un 9 des profils en creux de ce profilé 10.

La vis 15 est vissée sur le profilé 8, ce qui déforme la patte 2 qui viendra ainsi s'encastrer dans l'un des profils en creux 7 du profilé 8, cette déformation provoquant simultanément et par réaction l'écartement l'une de l'autre des griffes 6 qui viendront par conséquent mordre le profilé en creux 9 du profilé 13.

En d'autres termes, la déformation initiale de la patte 2 s'annule sous l'effet du vissage tout en permettant la fixation par accrochage des griffes 6 sur le profilé 13. C'est dire que les deux profilés 8 et 10 seront rapidement et solidement reliés l'un à l'autre et éventuellement à d'autres profilés grâce à l'utilisation d'autres attaches, de façon à réaliser par exemple une structure portante destinée à un usage quelconque.

On a donc réalisé suivant l'invention une attache en une seule pièce peu coûteuse, et très résistante aux efforts de traction et de glissement. En outre, une fois le serrage effectué avec la vis 15, l'attache ne déborde pas et s'intègre avantageusement dans le volume du profilé. Il faut encore ajouter que le démontage de l'attache et donc de la structure de profilés réalisée avec cette attache demeure facilement démontable, étant donné qu'il suffira simplement de dévisser une vis, à savoir la vis 15.

Il faut encore dire ici qu'une autre vis telle que 15 pourrait être prévue sur une autre patte 3, 4 ou 5 de l'attache qui serait elle aussi prédéformée, et cela sans sortir du cadre de l'invention.

C'est dire que l'invention n'est pas limitée au mode de réalisation décrit et illustré qui n'a été donné qu'à titre d'exemple.

A cet égard, on peut dire que l'attache pourrait ne comporter que deux pattes au lieu de quatre comme décrit et illustré, et que l'ouverture dans l'embase pourrait avoir une forme autre que carrée ou rectangulaire comme représenté.

## Revendications

1. Attache d'assemblage de profilés dont les faces externes possèdent un profil en creux, caractérisée en ce qu'elle comporte une embase (1) d'un côté de laquelle font saillie au moins deux pattes (2, 3, 4, 5) susceptibles de s'encastrer, par montage en bout sur un profilé, ou premier profilé (8), dans respectivement deux profils en creux (7) formant faces externes de ce profilé, et de l'autre côté de laquelle font saillie au moins deux griffes ou analogues (6) susceptibles de s'encastrer dans l'un (9) des profils en creux (9, 10, 11, 12) formant faces externes d'un deuxième profilé (13), au moins l'une (2) des deux pattes étant prédéformée pour qu'au serrage de cette patte sur le premier profilé (8), elle déforme une griffe (6) afin de permettre l'accrochage de l'attache sur le deuxième profilé (13).

2. Attache selon la revendication 1, caractérisée en ce qu'au moins l'une (2) des deux pattes prédéformées est traversée par un élément fileté, tel qu'une vis (15) pouvant être vissée sur le premier profilé (8).

3. Attache selon la revendication 1 ou 2, caractérisée en ce que les griffes précitées (6) constituent un prolongement des pattes (2, 3, 4, 5) en étant réunies à ces dernières par une partie (1a) de l'embase (1).

4. Attache selon l'une des revendications 1 à 3, caractérisée en ce que les griffes (6) sont constituées par des languettes (17) repliées à partir du bord d'une ouverture (16) ménagée dans l'embase (1).

5. Attache selon l'une des revendications 1 à 3, caractérisée en ce que l'embase (1) présente une forme sensiblement carrée dont chaque côté comporte une patte précitée qui est repliée d'un côté de l'embase (1), l'une (2) de ces pattes étant prédéformée, tandis que deux griffes (6) ou languettes (7), repliées de l'autre côté de l'embase (1) constituent le prolongement de deux pattes opposées (2, 4).

6. Attache selon l'une des revendications 1 à 5, caractérisée en ce que chaque patte (2, 3, 4, 5) comporte des bords latéraux repliés (18) coopérant avec les profils en creux (7) formant faces externes du premier profilé (8).

7. Structure de profilés obtenue à l'aide d'attaches suivant l'une quelconque des revendications 1 à 6.

## Claims

1. Fastener for the assembling of structural sections the external faces of which possess a hollow profile, characterized in that it comprises a base (1) from one side of which are projecting at least two lugs (2, 3, 4, 5) capable of fitting themselves through endwise mounting onto one structural section or first structural section (8) into two hollow profiles (7), respectively, forming external faces of this structural section and from the other side of which are projecting at least two claws or the like (6) capable of fitting themselves into one (9) of the hollow profiles (9, 10, 11, 12) forming external faces of a second structural section (13), at least one (2) of the two lugs being predeformed in order that upon the clamping of this lug onto the first structural section (8) it deforms one claw (6) in order to permit the hooking of the fastener onto the second structural section (13).

2. Fastener according to claim 1, characterized in that through at least one (2) of the two predeformed lugs extends a threaded element such as a screw (15) capable of being screwed onto the first structural section (8).

3. Fastener according to claim 1 or 2, characterized in that the aforesaid claws (6) constitute an extension of the lugs (2, 3, 4, 5) by being united to the latter by one portion (1a) of the base (1).

4. Fastener according to one of claims 1 to 3, characterized in that the claws (6) are constituted by tongues (17) bent from the edge of one opening (16) formed in the base (1).

5. Fastener according to one of claims 1 to 3, characterized in that the base (1) exhibits a substantially square shape each side of which comprises one aforesaid lug which is bent towards one side of the base (1), one (2) of these lugs being predeformed whereas two claws (6) or tongues (7) bent from the other side of the base (1) constitute the extension of two opposite lugs (2, 4).

6. Fastener according to one of claims 1 to 5, characterized in that each lug (2, 3, 4, 5) comprises bent side edges (18) co-operating with the hollow profiles (7) forming external faces of the first structural section (8).

7. Construction of structural sections obtained with the assistance of fasteners according to any one of claims 1 to 6.

## Patentansprüche

1. Verbindungsstück zum Zusammenbau von Profilstangen, deren Aussenflächen ein Hohlprofil besitzen, dadurch gekennzeichnet, dass es einen Grundteil (1) besitzt, von dessen einer Seite wenigstens zwei Ansatzlappen (2, 3, 4, 5) vorspringen, die geeignet sind, durch Anordnung am Ende an einer Profilstange oder ersten Profilstange (8), sich jeweils in zwei Aussenflächen dieser Profilstange bildenden Hohlprofile (7) einzufügen und von dessen anderer Seite wenigstens zwei Klammern oder dergleichen (6) vorspringen, die geeignet sind, sich in das eine (9) der Aussenflächen einer zweiten Profilstange (13) bildenden Hohlprofile (9, 10, 11, 12) einzufügen, wobei wenigstens einer (2) der beiden Ansatzlappen vorverformt ist, damit beim Einklemmen dieses Ansatzlappens an der ersten Profilstange (8), er eine Klammer (6) verformt, um das Einhaken des Verbindungsstückes an der zweiten Profilstange (13) zu gestatten.

2. Verbindungsstück nach Anspruch 1, dadurch gekennzeichnet, dass wenigstens einer (2) der beiden vorverformten Ansatzlappen durch ein an der ersten Profilstange (8) einschraubbaren Gewindeelement, wie eine Schraube (15) durchsetzt wird.

3. Verbindungsstück nach Anspruch 1 oder 2, dadurch gekennzeichnet, dass die vorgenannten Klammern (6) eine Verlängerung der Ansatzlappen (2, 3, 4, 5) bilden, und mit den letzteren duch einen Abschnitt (1a) des Grundteiles (1) vereinigt sind.

4. Verbindungsstück nach einem der Ansprüche 1 bis 3, dadurch gekennzeichnet, dass die Klammern (6) durch von dem Rand aus einer in dem Grundteil (1) gebildeten Öffnung (16) umgebogene Zungen (17) gebildet werden.

5. Verbindungsstück nach einem der Ansprüche 1 bis 3, dadurch gekennzeichnet, dass der Grundteil (1) eine etwa quadratförmige Gestalt aufweist, deren jede Seite einen vorgenannten Ansatzlappen aufweist, der zu einer Seite des Grundteiles (1) hin umgebogen ist, wobei einer (2) dieser Ansatzlappen vorverformt ist, während zwei auf der anderen Seite des Grundteiles (1) umgebogene Klammern (6) oder Zungen (7) den Fortsatz von zwei entgegengesetzten Ansatzlappen (2, 4) bilden.

6. Verbindungsstück nach einem der Ansprüche 1 bis 5, dadurch gekennzeichnet, dass jeder Ansatzlappen (2, 3, 4, 5) zwei mit den Aussenflächen der ersten Profilstange (8) bildenden Hohlprofilen (7) zusammenwirkende umgebogene Seitenränder (18) aufweist.

7. Mit Hilfe von Verbindungsstücken gemäss irgendeinem der Ansprüche 1 bis 6 erhaltener Aufbau aus Profilstangen.
